# EUROPÄISCHE PATENTSCHRIFT

(11) **EP 4 357 231 B1**
(45) Veröffentlichungstag und Bekanntmachung des Hinweises auf die Patenterteilung: **29.10.2025**
(21) Anmeldenummer: 23200166.9
(22) Anmeldetag: 27.09.2023
(51) Int. Cl.: B63B 1/24, B63B 1/30, B63B 32/10, B63B 32/60, B63B 32/66

(54) **HYDROFOILVORRICHTUNG UND WASSERSPORTGERÄT**
HYDROFOIL DEVICE AND WATER SPORT DEVICE
DISPOSITIF HYDROFOIL ET APPAREIL DE SPORT NAUTIQUE

(30) Priorität: 18.10.2022 DE 102022127226
(43) Veröffentlichungstag der Anmeldung: 24.04.2024
(73) Patentinhaber: Jetworx GmbH, 22851 Norderstedt (DE)
(72) Erfinder: KÖHNSEN, Jennifer, 22399 Hamburg (DE)
(74) Vertreter: Seemann & Partner Patentanwälte mbB

(56) Entgegenhaltungen:
- CA-A1- 3 208 395
- IT-A1- 202000 002 569
- US-A1- 2022 315 174

## Beschreibung

Die Erfindung betrifft eine Hydrofoilvorrichtung, umfassend wenigstens eine Tragfläche, eine Tragstütze, einen elektrischen Antrieb und wenigstens einen Akkumulator, wobei ein Kopfende der Tragstütze dazu ausgebildet ist, an einer Unterseite eines Rumpfs eines Wassersportgeräts fixiert zu werden, wobei die wenigstens eine Tragfläche an der Tragstütze fixiert ist, wobei der elektrische Antrieb an der Tragstütze und/oder der Tragfläche fixiert ist, wobei der wenigstens eine Akkumulator elektrisch mit dem elektrischen Antrieb verbunden ist und den elektrischen Antrieb mit elektrischer Energie versorgt. Zudem betrifft die Erfindung ein Wassersportgerät umfassend einen Rumpf und eine solche Hydrofoilvorrichtung.

Ein Hydrofoil, auch Tragflügel oder Tragfläche genannt, wird unter dem Rumpf eines Wasserfahrzeugs angebracht, um das Wasserfahrzeug bei steigender Geschwindigkeit aus dem Wasser anzuheben, so dass der Rumpf das Wasser nicht mehr berührt. Neben größeren Wasserfahrzeugen, wie beispielsweise Tragflügelbooten, werden Hydrofoils verstärkt auch bei Wassersportgeräten eingesetzt, beispielsweise bei elektrisch angetriebenen Surfbrettern oder bei Brettern für Kitsurfer.

Ein solches elektrisch angetriebenes Surfbrett mit einem Hydrofoil erlaubt es einem Nutzer, der auf dem Brett liegt oder steht, durch den elektrischen Antrieb aus dem Wasser gehoben zu werden, so dass aufgrund des reduzierten Widerstandes hohe Geschwindigkeiten erreicht werden können.

Patentveröffentlichungen CA3208395A1, IT202000002569A1 oder US2022/315174A1 offenbaren ein Hydrofoil, das auf einem (Surf-)Board befestigt wird, elektrisch angetrieben mit einem Transceiver, der auf dem Board befestigt und drahtlos mit einer Remote Control verbunden ist.

Vielfach ist jedoch die Flexibilität von solchen Wassersportgeräten begrenzt. Durch das zusätzliche Gewicht des Hydrofoil inklusive des Antriebs und der Akkumulatoren ist ein solches Wassersportgerät schwerer als Surfbretter ohne Hydrofoil und Antrieb. Dies erschwert eine Nutzung des Wassersportgeräts für Anwendungen, bei denen der elektrische Antrieb nicht benötigt wird. Zudem ist die Anschaffung von Wassersportgeräten mit angetriebenen Hydrofoil kostenintensiv. Gerade bei der Nutzung von verschiedenen Wassersportgeräten, beispielsweise von Surfbrettern verschiedener Länge und Breite, schlagen die Kosten des Hydrofoils, des elektrischen Antriebs und des Ackumulators ins Gewicht.

Es ist die Aufgabe der vorliegenden Erfindung, eine Hydrofoilvorrichtung und ein Wassersportgerät anzugeben, die eine hohe Flexibilität in der Nutzung erreichen und kostengünstig sind.

Diese Aufgabe wird gelöst durch eine Hydrofoilvorrichtung, umfassend wenigstens eine Tragfläche, eine Tragstütze, einen elektrischen Antrieb und wenigstens einen Akkumulator, wobei ein Kopfende der Tragstütze dazu ausgebildet ist, an einer Unterseite eines Rumpfs eines Wassersportgeräts fixiert zu werden, wobei die wenigstens eine Tragfläche an der Tragstütze fixiert ist, wobei der elektrische Antrieb an der Tragstütze und/oder der Tragfläche fixiert ist, wobei der wenigstens eine Akkumulator elektrisch mit dem elektrischen Antrieb verbunden ist und den elektrischen Antrieb mit elektrischer Energie versorgt, wobei die Hydrofoilvorrichtung dadurch weitergebildet ist, dass die Hydrofoilvorrichtung ferner eine längserstreckte Signalkabelführung aufweist, wobei ein hinteres Ende der Signalkabelführung an der Tragstütze angeordnet ist und ein vorderes Ende der Signalkabelführung eine Empfangsvorrichtung umfasst, wobei die Empfangsvorrichtung zum Empfang von Steuersignalen ausgebildet ist, wobei die Signalkabelführung wenigstens ein Signalkabel umschließt, wobei das Signalkabel zum Übermitteln der Steuersignale von der Empfangsvorrichtung an den elektrischen Antrieb ausgebildet ist, wobei die Signalkabelführung dazu ausgestaltet ist, eine Rumpfvorderkante des Wassersportgeräts zu umgreifen.

Vorteilhaft ist die Hydrofoilvorrichtung durch die längserstreckte Signalkabelführung sehr flexibel nutzbar. Die Hydrofoilvorrichtung ist als abnehmbares Zusatzgerät ausgestaltet und kann jederzeit an einem Wassersportgerät fixiert oder wieder abgenommen werden. Dazu wird einfach das Kopfende der Tragstütze an der Unterseite des Rumpfs des Wassersportgeräts fixiert und die Signalkabelführung so an dem Wassersportgerät angelegt, dass sie die Rumpfvorderkante umgreift. Die Signalkabelführung ist insbesondere dazu ausgebildet, an der Unterseite des Wassersportgeräts anzulegen. Insbesondere erstreckt sich diese Signalkabelführung von dem Kopfende der Tragstütze entlang der Unterseite des Rumpfs in Richtung des Bugs des Wassersportgeräts, wo das vordere Ende der Signalkabelführung die Rumpfvorderkante umgreift. Auf diese Weise wird die Empfangsvorrichtung, die sich am vorderen Ende der Signalkabelführung befindet, im Bugbereich des Wassersportgeräts angeordnet.

Die Empfangsvorrichtung ist insbesondere zum drahtlosen Empfang der Steuersignale ausgebildet. Durch eine drahtlose Übertragung werden zusätzliche Kabel auf der Oberseite des Rumpfs vermieden, die einen Nutzer während der Fahrt behindert könnten. Die Hydrofoilvorrichtung umfasst insbesondere eine Fernsteuervorrichtung, die dazu ausgebildet ist, die Steuersignale drahtlos an die Empfangsvorrichtung zu übermitteln. Beispielsweise hält ein Nutzer der Hydrofoilvorrichtung bzw. des Wassersportgeräts die Fernsteuervorrichtung in der Hand, während er auf dem Rumpf liegt oder steht. Auf diese Weise lässt sich das Wassersportgerät auf einfache Weise steuern. Mittels der Steuersignale wird insbesondere der elektrische Antrieb eingeschaltet und abgeschaltet und/oder eine Geschwindigkeit eingestellt und/oder eine Fahrtrichtung geändert, beispielsweise mittels eines Ruders des elektrischen Antriebs.

Durch die Signalkabelführung wird somit eine hohe Flexibilität erreicht, indem sie es ermöglicht, die Hydrofoilvorrichtung an unterschiedlichen Wassersportgeräten zu fixieren und trotzdem den Antrieb zuverlässig über die am Bug platzierte Empfangsvorrichtung ansteuern zu können. Neben einer erhöhten Flexibilität führt dies auch zu und einer Kostenersparnis, da beispielsweise ein Nutzer mit vielen verschiedenen Surfbrettern lediglich eine Hydrofoilvorrichtung benötigt, die an sämtlichen Surfbrettern fixierbar ist. Auch für Anbieter, die Wassersportgeräte zum Verleih anbieten, ist eine solche Hydrofoilvorrichtung äußerst vorteilhaft, da die Anschaffungskosten für den Hydrofoil, den elektrischen Antrieb und die Akkumulatoren reduziert werden. Zudem werden weniger Ressourcen verbraucht und die Umwelt geschont, da die Zahl der herzustellenden Hydrofoils, Antriebe und Akkumulatoren reduziert werden können.

Die Tragstütze der Hydrofoilvorrichtung wird auch als Mast, Streben oder Holm bezeichnet. Sie erstreckt sich in der Regel senkrecht von der Unterseite des Rumpfs nach unten, wenn die Hydrofoilvorrichtung am Rumpf befestigt ist. Auf diese Weise wird die wenigstens eine Tragfläche vertikal beabstandet zum Rumpf gehalten.

Die Signalkabelführung ist insbesondere wasserdicht ausgebildet. Auf diese Weise wird verhindert, dass das Signalkabel korrodiert oder auf andere Weise durch Wasser beschädigt wird.

Vorzugsweise ist die Signalkabelführung so ausgebildet, dass die Empfangsvorrichtung auf einer Oberseite des Rumpfs an einem Bug des Wassersportgeräts angeordnet ist, wenn das vordere Ende der Signalkabelführung die Rumpfvorderkante umgreift. Der bugseitige Bereich der Oberseite des Rumpfs ist besonders gut geeignet, um die Empfangsvorrichtung aufzunehmen, da dieser Bereich auch während der Fahrt mit dem Wassersportgerät über Wasser liegt und nicht vom Wasser überspült wird. Auf diese Weise wird eine störungsfreie Übertragung der Steuersignale von der Fernsteuervorrichtung an die Empfangsvorrichtung sichergestellt.

Die Signalkabelführung ist vorzugsweise in einer Längsrichtung elastisch ausgebildet, wobei die Signalkabelführung insbesondere aus Gummi besteht oder Gummi umfasst.

Die elastische Ausbildung der Signalkabelführung ist vorteilhaft, da auf diese Weise die Hydrofoilvorrichtung ohne Probleme an unterschiedlich langen Rümpfen befestigt werden kann. Bei einem längeren Rumpf wird die Signalkabelführung stärker gedehnt als bei einem kürzeren Rumpf. In beiden Fällen liegt jedoch das vordere Ende der Signalkabelführung an der Rumpfvorderkante an und umgreift diese, um auf diese Weise die Signalkabelführung sicher am Rumpf zu halten. Das wenigstens eine Signalkabel ist insbesondere ebenfalls in Längsrichtung elastisch ausgebildet. In der vorliegenden Beschreibung ist die Längsrichtung als die Richtung definiert, in die sich die Signalkabelführung erstreckt. Wenn die Hydrofoilvorrichtung an dem Wassersportgerät fixiert ist, entspricht die Längsrichtung im Wesentlichen der Richtung vom Heck zum Bug des Wassersportgeräts oder umgekehrt.

Bevorzugt ist die Signalkabelführung als flaches Band ausgebildet. Eine Ausbildung als flaches Band ist vorteilhaft, da die Signalkabelführung auf diese Weise sicher an der Unterseite des Rumpfes anliegen kann ohne zu verrutschen. Die Signalkabelführung und das wenigstens eine Signalkabel sind insbesondere als Flachbandkabel ausbildet.

Vorzugsweise umfasst das vordere Ende der Signalkabelführung wenigstens eine quer zur Längsrichtung verlaufende Knickkante, durch die eine Klemme ausgebildet ist, um die Rumpfvorderkante zu umgreifen.

Durch die Knickkante kann das vordere Ende der Signalkabelführung die Rumpfvorderkante sicher umgreifen. Insbesondere umfasst das vordere Ende wenigstens zwei Knickkanten. Dadurch wird erreicht, dass ein erster Teil der Signalkabelführung an der Unterseite, ein zweiter Teil an der Rumpfvorderkante und ein dritter Teil an der Oberseite des Rumpfes anliegt und so die Klemme ausgebildet wird. Gemäß einer Ausführungsform umfasst die Signalkabelführung mehr als zwei Knickkanten, um die Klemme an unterschiedliche Rumpfdicken und Rumpflängen anpassen zu können. Insbesondere ist die Klemme elastisch ausgebildet. Durch eine elastische Ausbildung der Klemme wird die Flexibilität bei der Fixierung des vorderen Endes der Signalkabelführung an Wassersportgeräten erhöht.

Vorzugsweise umfasst das vordere Ende der Signalkabelführung eine Halterung, die dazu ausgebildet ist, an der Oberseite des Rumpfs fixiert zu werden. Durch die Halterung wird die Signalkabelführung noch sicherer am Rumpf fixiert. Insbesondere umfasst die Halterung ein Verriegelungselement, welches mit einem Gegenstück am Bug auf der Oberseite des Rumpfs zusammenwirkt. Auf diese Weise lässt sich die Signalkabelführung auf einfache Weise lösbar am Rumpf befestigen. Beispielsweise ist die Halterung ein Riegel oder ein Vorsprung, der in eine komplementäre Ausnehmung auf der Oberseite des Rumpfs eingreift. Gemäß einer anderen beispielshaften Ausführungsform bildet der Bug einen Wulst aus, hinter der sich die Halterung festklemmt.

Gemäß einer Ausführungsform umschließt die Signalkabelführung zusätzlich zu dem wenigstens einem Signalkabel ein Notstoppkabel, wobei das Notstoppkabel insbesondere zum Übermitteln eines Notstoppsignals von einem Reedschalter an den elektrischen Antrieb ausgebildet ist, wobei die Hydrofoilvorrichtung ferner insbesondere einen an eine Halteleine gekoppelten Magneten umfasst, der lösbar an dem Reedschalter fixierbar ist, wobei der Reedschalter insbesondere dazu ausgebildet ist, an dem Wassersportgerät fixiert zu werden und das Notstoppsignal zu erzeugen, wenn der Magnet von dem Reedschalter entfernt wird.

Die Halteleine ist insbesondere dazu ausgebildet ist, an einem Handgelenk eines Nutzers befestigt zu werden. Solange der Magnet am Reedschalter fixiert ist, ist das Wassersportgerät fahrbereit. Wenn der Nutzer vom Wassersportgerät herunterfällt, zieht er die Halteleine und damit den Magneten mit sich und entfernt den Magnet somit vom Reedschalter. Auf diese Weise wird das Notstoppsignal erzeugt und der elektrische Antrieb stoppt.

Gemäß einer Ausführungsform sind der Magnet und die Halteleine an der Fernsteuervorrichtung fixiert. Somit wird die Fernsteuervorrichtung mittels der Halteleine beispielsweise am Handgelenk des Nutzers befestigt. Insbesondere umfasst das Wassersportgerät einen Griff mit einer Ausnehmung, in die die Fernsteuervorrichtung einschiebbar ist. Der Reedschalter ist insbesondere an dem Griff fixiert. Solange die Fernsteuervorrichtung in die Ausnehmung eingeschoben ist, ist das Wassersportgerät fahrbereit. Wird die Fernsteuervorrichtung herausgezogen, stoppt das Wassersportgerät.

Gemäß einer anderen Ausführungsform ist der Magnet direkt an der Halteleine fixiert. In dieser Ausführungsform ist der Reedschalter insbesondere auf der Oberseite des Wassersportgeräts angeordnet. Fällt der Nutzer vom Wassersportgerät, zieht er den Magneten vom Reedschalter ab und das Wassersportgerät stoppt.

Gemäß einer weiteren Ausführungsform umfasst das Wassersportgerät einen, insbesondere fest, am Rumpf fixierten Griff. Der Griff umfasst insbesondere ein Bedienelement, das dazu ausgebildet ist, die Steuersignale zu erzeugen und die Leistung des Antriebs zu regulieren. Das Bedienelement ist insbesondere ein auslenkbares Bedienelement, beispielsweise ein Gashebel. Die Auslenkung des auslenkbares Bedienelements wird insbesondere mittels eines Hallsensors detektiert, der insbesondere an der Halteleine fixiert ist. Wird die Halteleine beim Herunterfallen des Nutzers weggezogen, detektiert der Hallsensor nicht länger die Auslenkung des auslenkbaren Bedienelements, so dass der Antrieb nicht länger angesteuert wird und stoppt. Auf diese Weise wird eine Redundanz beim Erzeugen des Notstopps im Falle eines Herunterfallens vom Wassersportgerät erreicht, da sowohl der Reedschalter ein Notstoppsignal erzeugt als auch der Hallsensor nicht länger den elektrischen Antrieb ansteuert.

Bevorzugt umfasst das Kopfende der Tragstütze einen Adapter, mittels dem die Hydrofoilvorrichtung an der Unterseite des Wassersportgeräts fixierbar ist, wobei der Adapter insbesondere vier Bohrungen aufweist.

Der Adapter ermöglicht es, die Hydrofoilvorrichtung an verschiedensten Wassersportgeräten zu fixieren. Insbesondere weist der Adapter einen genormten Lochabstand auf. Mittels den Bohrungen wird die Hydrofoilvorrichtung beispielsweise an den Rumpf des Wassersportgeräts festgeschraubt.

Der elektrische Antrieb ist vorzugsweise ein Impeller oder ein Jetantrieb. Durch die Ausbildung des elektrischen Antriebs als Impeller oder Jetantrieb wird eine hohe Sicherheit gewährleistet. Es wird beispielsweise verhindert, dass sich ein Nutzer an einem freilaufenden Propeller verletzt.

Gemäß einer Ausführungsform umfasst der wenigstens eine Akkumulator einen integrierten Akkumulator, der in der Tragstütze angeordnet ist.

Durch die Anordnung des Akkumulators in der Tragstütze steht genügend Bauraum für den Akkumulator zur Verfügung, ohne dass der Akkumulator als von den übrigen Bauteilen der Hydrofoilvorrichtung getrenntes Bauteil ausgebildet werden müsste. Bei dem Transfer der Hydrofoilvorrichtung von einem Wassersportgerät zu einem anderen Wassersportgerät muss vorteilhaft der Akkumulator nicht separat umgebaut werden.

Vorzugsweise umfasst die Tragstütze einen Hohlraum zur Aufnahme einer Kühlflüssigkeit, wobei der integrierte Akkumulator so in der Tragstütze angeordnet ist, dass er zumindest teilweise von der Kühlflüssigkeit umgeben ist. Bei der Kühlflüssigkeit handelt es sich beispielsweise um ein eFluid der Firma Castrol. Gemäß einer Ausführungsform ist ein Material der Tragstütze wärmeleitend. Auf diese Weise kann die Wärme des Akkumulators mittels der Kühlflüssigkeit effektiv abgegeben werden.

Gemäß einer Ausführungsform umfasst der wenigstens eine Akkumulator einen integrierten Akkumulator, der in der wenigstens einen Tragfläche angeordnet ist. Durch die Anordnung des Akkumulators in der Tragfläche wird eine besonders kompakte Bauform erreicht.

Vorzugsweise umfasst die wenigstens eine Tragfläche eine vordere Tragfläche, wobei der integrierte Akkumulator in der vorderen Tragfläche angeordnet ist, wobei der elektrische Antrieb an der vorderen Tragfläche fixiert ist, so dass die vordere Tragfläche mit de m integrierten Akkumulator und dem elektrischen Antrieb eine Baueinheit bildet. Vorteilhaft wird durch die Ausbildung der vorderen Tragfläche mit dem integrierten Akkumulator und dem elektrischen Antrieb als Baueinheit eine besonders leicht zu transportierende Ausführungsform der Hydrofoilvorrichtung zur Verfügung gestellt. Insbesondere ist die Baueinheit lösbar an der Tragstütze fixiert, um einen Transport zu vereinfachen. Gemäß einer beispielhaften Ausführungsform sind in einem linken Teil und in einem rechten Teil der vorderen Tragfläche je ein Akkumulator eingebaut. Dabei handelt es sich beispielsweise um Lithiumpolymerakkumulatoren mit einer Kapazität von jeweils 160Wh und/oder Abmessungen von 300,0 mm Länge, 42,0 mm Breite und 44,0 mm Höhe. Akkumulatoren dieser Leistung und Größe sind gut geeignet, um in einer Tragfläche untergebracht zu werden und liefern trotzdem genug Leistung, um die Hydrofoilvorrichtung und das Wassersportgerät anzutreiben.

Vorzugsweise umfasst die wenigstens eine Tragfläche wenigstens eine klappbare Tragfläche, wobei die wenigstens eine klappbare Tragfläche von einer an der Tragstütze anliegenden Position in eine orthogonal zur Tragstütze ausgerichteten Position verschwenkbar ist.

Durch die Ausbildung als klappbare Tragfläche wird der Transport der Hydrofoilvorrichtung weiter vereinfacht. Während der Nutzung der Hydrofoilvorrichtung sind die Tragflächen wie bei anderen Hydrofoils orthogonal zur Tragstütze ausgerichtet, können jedoch für einen vereinfachten Transport an die Tragstütze angelegt werden.

Die Aufgabe wird zudem gelöst durch ein Wassersportgerät, umfassend einen Rumpf und eine Hydrofoilvorrichtung nach einer der zuvor beschriebenen Ausführungsform, wobei das Kopfende der Tragstütze der Hydrofoilvorrichtung an einer Unterseite des Rumpfs fixiert ist, wobei das vordere Ende der Signalkabelführung die Rumpfvorderkante umgreift.

Das Wassersportgerät verkörpert die gleichen Vorteile, Merkmale und Eigenschaften wie die zuvor beschriebene Hydrofoilvorrichtung.

Bei dem Wassersportgerät handelt es sich insbesondere um ein Surfbrett, ein Kanu, ein Tenderboot oder einen Tauchscooter.

Vorzugsweise ist die Signalkabelführung ausgehend von der Tragstütze entlang der Unterseite des Rumpfs zur Rumpfvorderkante geführt. Auf diese Weise wird ein sicheres Anliegen der Signalkabelführung an dem Rumpf erreicht.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte perspektivische Darstellung einer Hydrofoilvorrichtung mit einer längserstreckten Signalkabelführung,
- Fig. 2: eine schematisch vereinfachte perspektivische Darstellung einer Hydrofoilvorrichtung, die an dem Rumpf eines Wassersportgeräts befestigt ist,
- Fig. 3: eine schematisch vereinfachte perspektivische Darstellung einer weiteren Ausführungsform einer Hydrofoilvorrichtung, die an einem Rumpf eines Wassersportgeräts fixiert ist,
- Fig. 4: eine schematisch vereinfachte perspektivische Darstellung der Signalkabelführung einer Hydrofoilvorrichtung, die mittels einer Halterung am Bug eines Wassersportgeräts fixiert ist,

- Fig. 5: eine schematisch vereinfachte perspektivische Darstellung einer Hydrofoilvorrichtung, bei der der Antrieb, die Tragflächen und die Akkumulatoren eine Baueinheit bilden und
- Fig. 6: eine schematisch vereinfachte perspektivische Darstellung eines Bugs eines Wassersportgeräts mit einer Hydrofoilvorrichtung und einem Notstoppkabel.

In den Zeichnungen sind jeweils gleiche oder gleichartige Elemente und/oder Teile mit denselben Bezugsziffern versehen, so dass von einer erneuten Vorstellung jeweils abgesehen wird.

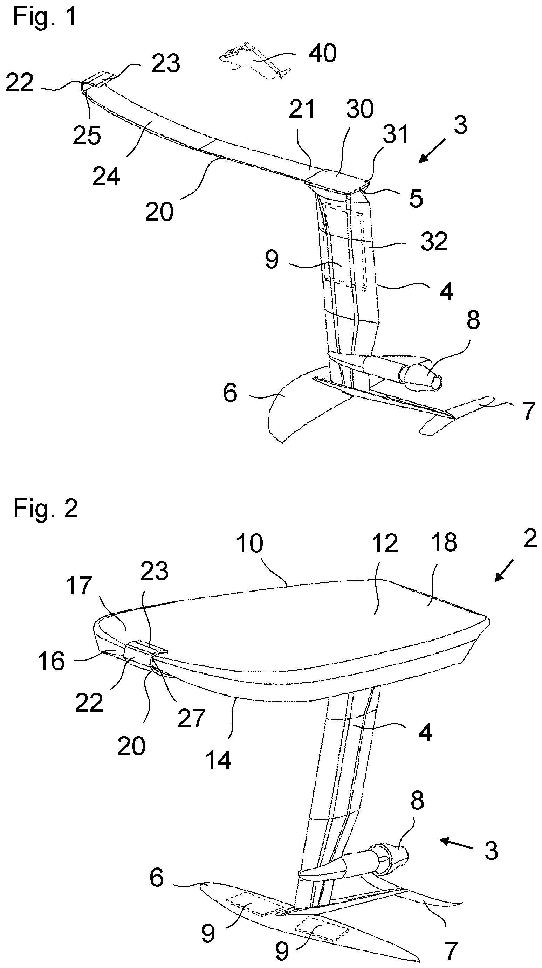

In Fig. 1 ist schematisch vereinfacht eine Hydrofoilvorrichtung 3 in einer perspektivischen Darstellung gezeigt. Die Hydrofoilvorrichtung 3 umfasst eine vordere Tragfläche 6 und eine hintere Tragfläche 7, die direkt oder mittels eines Auslegers an einer Tragstütze 4 fixiert sind. In die Tragstütze 4 ist zudem ein elektrischer Antrieb 8 integriert, der in der dargestellten Ausführungsform als Impeller ausgebildet ist. Ein in die Tragstütze 4 eingebauter Akkumulator 9 versorgt den elektrischen Antrieb 8 mit elektrischer Energie. Der Akkumulator 9 ist in einem Hohlraum 32 aufgenommen, in dem der Akkumulator 9 zumindest teilweise von einer Kühlflüssigkeit umgeben ist. Da der Ackumulator 9 in Fig. 1 in die Tragstütze 4 integriert ist und daher eigentlich nicht sichtbar wäre, ist der Akkumulator 9 mit gestrichelten Linien dargestellt. An ihrem Kopfende 5 weist die Tragstütze 4 einen Adapter 30 auf, in dem vier Bohrungen 31 eingebracht sind, von denen aus Übersichtlichkeitsgründen nur eine mit einem Bezugszeichen versehen ist. Mittels dieses Adapters 30 wird das Kopfende 5 an einem Rumpf eines Wassersportgerätes fixiert, beispielsweise festgeschraubt.

Eine längserstreckte, elastische Signalkabelführung 20 erstreckt sich von einem hinteren Ende 21, das an dem Kopfende 5 der Tragstütze 4 angeordnet ist, bis zu einem vorderen Ende 22. In der Signalkabelführung 20 sind ein oder mehrere Signalkabel 24 geführt, die in Fig. 1 innerhalb der Signalkabelführung 20 angeordnet und daher nicht sichtbar sind. Das Signalkabel 24 verbindet den elektrischen Antrieb 8 mit einer an dem vorderen Ende 22 angeordneten Empfangsvorrichtung 23. Die Empfangsvorrichtung 23 ist dazu ausgebildet, drahtlos Steuersignale zu empfangen, beispielsweise von einer Fernsteuervorrichtung 40, die von einem Nutzer in der Hand gehalten wird. Die Steuersignale werden von der Empfangsvorrichtung 23 über das Signalkabel 24 an den elektrischen Antrieb 8 weitergeleitet und ermöglichen es, den elektrischen Antrieb 8 mittels der Fernsteuervorrichtung 40 anzusteuern. An dem vorderen Ende 22 umfasst die Signalkabelführung 20 mehrere Knickkanten 25, von denen aus Gründen der Übersichtlichkeit wiederum nur eine mit einem Bezugszeichen versehen ist. Durch diese Knickkanten 25 lässt sich das vordere Ende 22 zu einer Klemme 27 formen, mit der das vordere Ende 22 an einer Rumpfvorderkante des Wassersportgeräts fixiert werden kann.

Fig. 2 zeigt schematisch vereinfacht ein beispielhaft als Surfbrett ausgebildetes Wassersportgerät 2, an dessen Rumpf 10 die Hydrofoilvorrichtung 3 fixiert ist. Hierzu ist das in Fig. 2 verdeckte Kopfende 5 der Tragstütze 4 mittels des Adapters 30 an einer Unterseite 14 des Rumpfs 10 fixiert. Gleichzeitig greift das vordere Ende 22 um die Rumpfvorderkante 16 des Rumpfs 10 herum, um die Signalkabelführung 20 sicher am Rumpf 10 zu halten. Auf diese Weise wird auch erreicht, dass die Empfangsvorrichtung 23 auf der Oberseite 12 des Rumpfs 10 im Bereich des Bugs 17 des Wassersportgeräts 2 positioniert ist. Eine solche Anordnung der Empfangsvorrichtung 23 sorgt für eine störungsfreie Übertragung von Steuersignalen von der Fernsteuervorrichtung 40 zu der Empfangsvorrichtung 23 zu jedem Zeitpunkt der Nutzung des Wassersportgeräts 2.

Durch die elastische Ausbildung der Signalkabelführung 20 lässt sich diese ohne weiteres an Wassersportgeräten 2 mit unterschiedlichen Rumpflängen fixieren. Soll die Signalkabelführung 20 beispielsweise an einem längeren Rumpf 10 angebracht werden, wird diese entlang ihrer Längsrichtung in die Länge gezogen und das vordere Ende 22 an der Rumpfvorderkante 16 platziert. Die Längsrichtung erstreckt sich im Wesentlichen von einem Heck 18 des Wassersportgeräts 2 zu dem Bug 17.

Im Gegensatz zu der in Fig. 1 gezeigten Ausführungsform umfasst die Hydrofoilvorrichtung 3 in Fig. 2 nicht einen, sondern zwei Akkumulatoren 9. Diese sind zudem nicht in der Tragstütze 4, sondern in der vorderen Tragfläche 6 angeordnet.

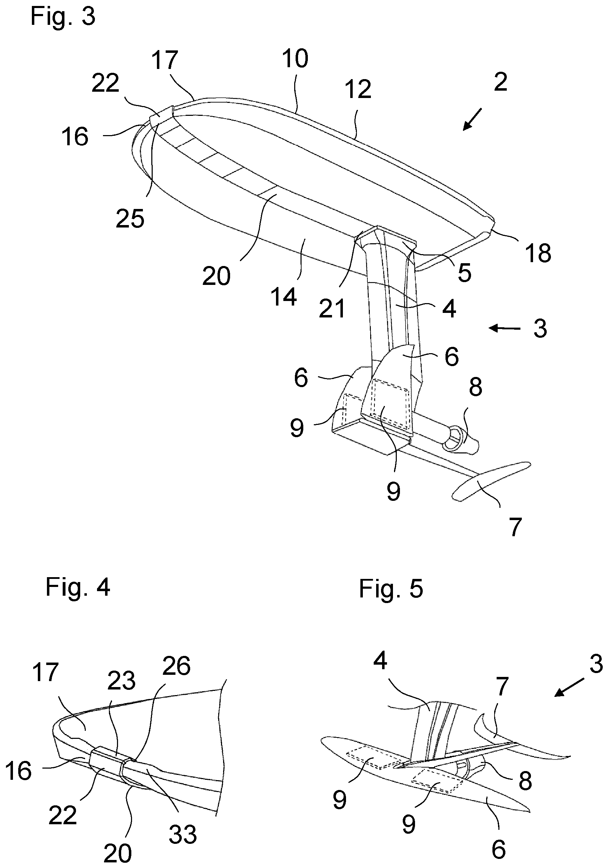

Fig. 3 zeigt schematisch vereinfacht eine weitere Ausführungsform der Hydrofoilvorrichtung 2 in einer schematisch vereinfachten Darstellung perspektivisch von unten. Diese Ausführungsform unterscheidet sich dadurch, dass die Flügel der vorderen Tragfläche 6 klappbar ausgestaltet sind. Durch Hochklappen der Flügel an die Tragstütze 4, wie in Fig. 3 gezeigt, ist ein erleichterter Transport der Hydrofoilvorrichtung 3 möglich. Bei der Nutzung der Hydrofoilvorrichtung 3 werden die Flügel wieder in ihre horizontale Lage zurückgeklappt, so dass sie das Wassersportgerät 2 bei der Nutzung aus dem Wasser heben.

Fig. 4 zeigt schematisch vereinfacht einen Bugabschnitt eines Wassersportgeräts 2 mit einer Signalkabelführung 20. Die Signalkabelführung 20 und der Bug 17 des Wassersportgeräts 2 unterscheiden sich von der Ausführungsform gemäß Fig. 2 darin, dass der Rumpf 10 auf der Oberseite 12 im Bereich des Bugs 17 eine Verdickung 33 bzw. einen Wulst aufweist. Das vordere Ende 22 der Signalkabelführung 20 umfasst eine Haltung 26, die um diese Verdickung 33 herumgreift und die Signalkabelführung 20 auf diese Weise sicher am Rumpf 10 fixiert.

In Fig. 5 ist schematisch vereinfacht eine weitere Ausführungsform einer Hydrofoilvorrichtung 3 gezeigt. Diese Hydrofoilvorrichtung 3 unterscheidet sich von der Ausführungsform gemäß Fig. 2 darin, dass der Antrieb 8 zusammen mit den Tragflächen 6, 7 und den Akkumulatoren 9 eine Baueinheit bildet. Insbesondere ist diese Baueinheit lösbar an der Tragstütze 4 fixiert, um einen Transport zu vereinfachen.

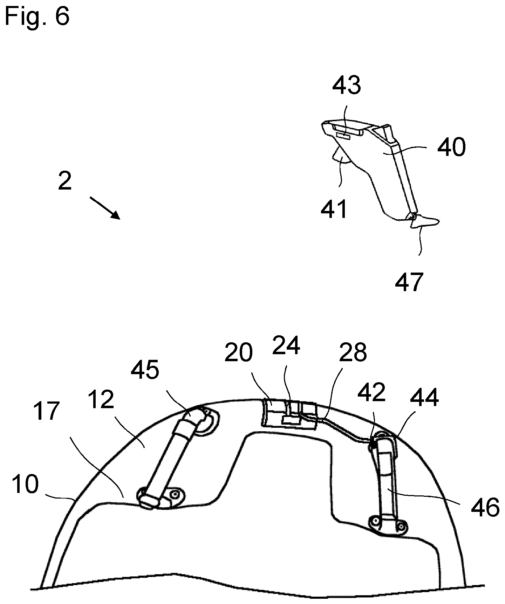

Fig. 6 zeigt den Bug 17 eines Wassersportgeräts 2 mit einer Signalkabelführung 20 einer Hydrofoilvorrichtung 3. Auf der Oberseite 12 des Rumpfs 10 ist ein linker Griff 45 und ein rechter Griff 44 angeordnet. Die Signalkabelführung 20 enthält neben einem Signalkabel 24 auch ein Notstoppkabel 28, dass von dem elektrischen Antrieb 8 zu einem Reedschalter 42 geführt ist, der am Griff 44 angeordnet ist. Der Griff 44 umfasst eine Ausnehmung 46 zur Aufnahme der Steuervorrichtung 40. Die Steuervorrichtung 40 umfasst ein auslenkbares Bedienelement 41, beispielsweise einen Gashebel, um die Leistung des Antriebs 8 zu regulieren. Zudem umfasst die Fernsteuervorrichtung 40 eine Halteleine 47, um die Fernsteuervorrichtung 40 an einem Handgelenk eines Nutzers zu befestigen. Außerdem umfasst die Fernsteuervorrichtung 40 einen Magneten 43. Solange die Fernsteuervorrichtung 40 in der Ausnehmung 46 angeordnet ist, wirkt der Magnet 43 auf den Reedschalter 42, wodurch im Reedschalter 42 ein Stromkreis geöffnet oder geschlossen wird. In diesem Zustand kann der Antrieb 8 normal angesteuert werden. Fällt der Nutzer jedoch vom Wassersportgerät 2, wird die Fernsteuervorrichtung 40 durch die Halteleine 47 aus der Ausnehmung 46 gezogen, so dass der Magnet 43 nicht mehr in der Nähe des Reedschalters 42 angeordnet ist. Dadurch wird der Reedschalter in den anderen Zustand überführt, der Stromkreis wird also geschlossen oder geöffnet. Dies erzeugt ein Notstoppsignal, das an den elektrischen Antrieb 8 übermittelt wird, so dass der Antrieb 8 abgeschaltet wird und das Wassersportgerät 2 anhält. Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Wassersportgerät
- 3: Hydrofoilvorrichtung
- 4: Tragstütze
- 5: Kopfende
- 6: Tragfläche
- 7: Tragfläche
- 8: Antrieb
- 9: Akkumulator
- 10: Rumpf
- 12: Oberseite
- 14: Unterseite
- 16: Rumpfvorderkante
- 17: Bug
- 18: Heck
- 20: Signalkabelführung
- 21: hinteres Ende
- 22: vorderes Ende
- 23: Empfangsvorrichtung
- 24: Signalkabel
- 25: Knickkante
- 26: Halterung
- 27: Klemme
- 28: Notstoppkabel
- 30: Adapter
- 31: Bohrung
- 32: Hohlraum
- 33: Verdickung
- 40: Fernsteuervorrichtung
- 41: Bedienelement
- 42: Reedschalter
- 43: Magnet
- 44: Griff
- 45: Griff
- 46: Ausnehmung
- 47: Halteleine
- 48: Hallsensor

## Patentansprüche

1. Hydrofoilvorrichtung (3), umfassend wenigstens eine Tragfläche (6, 7), eine Tragstütze (4), einen elektrischen Antrieb (8) und wenigstens einen Akkumulator (9), wobei ein Kopfende (5) der Tragstütze (4) dazu ausgebildet ist, an einer Unterseite (14) eines Rumpfs (10) eines Wassersportgeräts (2) fixiert zu werden, wobei die wenigstens eine Tragfläche (6, 7) an der Tragstütze (4) fixiert ist, wobei der elektrische Antrieb (8) an der Tragstütze (4) und/oder der Tragfläche (6, 7) fixiert ist, wobei der wenigstens eine Akkumulator (9) elektrisch mit dem elektrischen Antrieb (8) verbunden ist und den elektrischen Antrieb (8) mit elektrischer Energie versorgt, **dadurch gekennzeichnet, dass** die Hydrofoilvorrichtung (3) ferner eine längserstreckte Signalkabelführung (20) aufweist, wobei ein hinteres Ende (21) der Signalkabelführung (20) an der Tragstütze (4) angeordnet ist und ein vorderes Ende (22) der Signalkabelführung (20) eine Empfangsvorrichtung (23) umfasst, wobei die Empfangsvorrichtung (23) zum Empfang von Steuersignalen ausgebildet ist, wobei die Signalkabelführung (20) wenigstens ein Signalkabel (24) umschließt, wobei das Signalkabel (24) zum Übermitteln der Steuersignale von der Empfangsvorrichtung (23) an den elektrischen Antrieb (8) ausgebildet ist, wobei die Signalkabelführung (20) dazu ausgestaltet ist, eine Rumpfvorderkante (16) des Wassersportgeräts (2) zu umgreifen.

2. Hydrofoilvorrichtung (3) nach Anspruch 1, **dadurch gekennzeichnet, dass** die Signalkabelführung (20) so ausgebildet ist, dass die Empfangsvorrichtung (23) auf einer Oberseite (12) des Rumpfs (10) an einem Bug (17) des Wassersportgeräts (2) angeordnet ist, wenn das vordere Ende (22) der Signalkabelführung (22) die Rumpfvorderkante (16) umgreift.

3. Hydrofoilvorrichtung (3) nach Anspruch 1 oder 2, **dadurch gekennzeichnet, dass** die Signalkabelführung (20) in einer Längsrichtung elastisch ausgebildet ist, wobei die Signalkabelführung (20) insbesondere aus Gummi besteht oder Gummi umfasst.

4. Hydrofoilvorrichtung (3) nach einem der Ansprüche 1 bis 3, **dadurch gekennzeichnet, dass** die Signalkabelführung (20) als flaches Band ausgebildet ist.

5. Hydrofoilvorrichtung (3) nach einem der Ansprüche 1 bis 4, **dadurch gekennzeichnet, dass** das vordere Ende (22) der Signalkabelführung (20) wenigstens eine quer zur Längsrichtung verlaufende Knickkante (25) umfasst, durch die eine Klemme (27) ausgebildet ist, um die Rumpfvorderkante (16) zu umgreifen.

6. Hydrofoilvorrichtung (3) nach einem der Ansprüche 1 bis 5, **dadurch gekennzeichnet, dass** das vordere Ende der Signalkabelführung (20) eine Halterung (26) umfasst, die dazu ausgebildet ist, an der Oberseite (12) des Rumpfs (10) fixiert zu werden.

7. Hydrofoilvorrichtung (3) nach einem der Ansprüche 1 bis 6, **dadurch gekennzeichnet, dass** die Signalkabelführung (20) zusätzlich zu dem wenigstens einen Signalkabel (24) ein Notstoppkabel (28) umschließt, wobei das Notstoppkabel (28) insbesondere zum Übermitteln eines Notstoppsignals von einem Reedschalter (42) an den elektrischen Antrieb (8) ausgebildet ist, wobei die Hydrofoilvorrichtung (3) ferner insbesondere einen an eine Halteleine (47) gekoppelten Magneten (43) umfasst, der lösbar an dem Reedschalter (42) fixierbar ist, wobei der Reedschalter (42) insbesondere dazu ausgebildet ist, an dem Wassersportgerät (2) fixiert zu werden und das Notstoppsignal zu erzeugen, wenn der Magnet (43) von dem Reedschalter (42) entfernt wird.

8. Hydrofoilvorrichtung (3) nach einem der Ansprüche 1 bis 7, **dadurch gekennzeichnet, dass** das Kopfende (5) der Tragstütze (4) einen Adapter (30) umfasst, mittels dem die Hydrofoilvorrichtung (3) an der Unterseite (14) des Wassersportgeräts (2) fixierbar ist, wobei der Adapter (30) insbesondere vier Bohrungen (31) aufweist.

9. Hydrofoilvorrichtung (3) nach einem der Ansprüche 1 bis 8, **dadurch gekennzeichnet, dass** der elektrische Antrieb (8) ein Impeller oder ein Jetantrieb ist.

10. Hydrofoilvorrichtung (3) nach einem der Ansprüche 1 bis 9, **dadurch gekennzeichnet, dass** der wenigstens eine Akkumulator (9) einen integrierten Akkumulator (9) umfasst, der in der Tragstütze (4) angeordnet ist.

11. Hydrofoilvorrichtung (3) nach Anspruch 10, **dadurch gekennzeichnet, dass** die Tragstütze (4) einen Hohlraum zur Aufnahme einer Kühlflüssigkeit umfasst, wobei der integrierte Akkumulator (4) so in der Tragstütze (4) angeordnet ist, dass er zumindest teilweise von der Kühlflüssigkeit umgeben ist.

12. Hydrofoilvorrichtung (3) nach einem der Ansprüche 1 bis 11, **dadurch gekennzeichnet, dass** der wenigstens eine Akkumulator (9) einen integrierten Akkumulator (9) umfasst, der in der wenigstens einen Tragfläche (6, 7) angeordnet ist.

13. Hydrofoilvorrichtung (3) nach Anspruch 12, **dadurch gekennzeichnet, dass** die wenigstens eine Tragfläche (6, 7) eine vordere Tragfläche (6) umfasst, wobei der integrierte Akkumulator (9) in der vorderen Tragfläche (6) angeordnet ist, wobei der elektrische Antrieb (8) an der vorderen Tragfläche (6) fixiert ist, so dass die vordere Tragfläche (6) mit dem integrierten Akkumulator (9) und dem elektrischen Antrieb (8) eine Baueinheit bildet.

14. Hydrofoilvorrichtung (3) nach einem der Ansprüche 1 bis 13, **dadurch gekennzeichnet, dass** die wenigstens eine Tragfläche (6, 7) wenigstens eine klappbare Tragfläche (6, 7) umfasst, wobei die wenigstens eine klappbare Tragfläche von einer an der Tragstütze (4) anliegenden Position in eine orthogonal zur Tragstütze (4) ausgerichteten Position verschwenkbar ist.

15. Wassersportgerät (2), umfassend einen Rumpf (10) und eine Hydrofoilvorrichtung (3) nach einem der Ansprüche 1 bis 14, wobei das Kopfende (5) der Tragstütze (4) der Hydrofoilvorrichtung (3) an einer Unterseite (14) des Rumpfs (10) fixiert ist, wobei das vordere Ende (22) der Signalkabelführung (20) die Rumpfvorderkante (16) umgreift, wobei insbesondere die Signalkabelführung (20) ausgehend von der Tragstütze (4) entlang der Unterseite (14) des Rumpfs (10) zur Rumpfvorderkante (16) geführt ist.

## Claims

1. A hydrofoil device (3), comprising at least one foil (6, 7), a support column (4), an electric drive (8) and at least one battery (9), wherein a head end (5) of the support column (4) is designed to be secured to an underside (14) of a hull (10) of a piece of water sports equipment (2), wherein the at least one foil (6, 7) is secured to the support column (4), wherein the electric drive (8) is secured to the support column (4) and/or the foil (6, 7), wherein the at least one battery (9) is electrically connected to the electric drive (8) and supplies the electric drive (8) with electrical energy, **characterized in that** the hydrofoil device (3) further comprises an elongate signal cable duct (20), wherein a rear end (21) of the signal cable duct (20) is arranged at the support column (4) and a front end (22) of the signal cable duct (20) comprises a receiving device (23), wherein the receiving device (23) is designed to receive control signals, wherein the signal cable duct (20) encloses at least one signal cable (24), wherein the signal cable (24) is designed to transmit the control signals from the receiving device (23) to the electric drive (8), wherein the signal cable duct (20) is designed to grip around a front edge (16) of the hull of the piece of water sports equipment (2).

2. The hydrofoil device (3) according to claim 1, **characterized in that** the signal cable duct (20) is designed such that the receiving device (23) is arranged on an upper side (12) of the hull (10) at a bow (17) of the piece of water sports equipment (2) when the front end (22) of the signal cable duct (22) grips around the front edge (16) of the hull.

3. The hydrofoil device (3) according to claim 1 or 2, **characterized in that** the signal cable duct (20) is designed to be elastic in a longitudinal direction, wherein the signal cable duct (20) in particular consists of rubber or comprises rubber.

4. The hydrofoil device (3) according to any one of claims 1 to 3, **characterized in that** the signal cable duct (20) is designed as a flat strip.

5. The hydrofoil device (3) according to any one of claims 1 to 4, **characterized in that** the front end (22) of the signal cable duct (20) comprises at least one bending edge (25) which extends transversely to the longitudinal direction and by means of which a clamp (27) is formed for gripping around the front edge (16) of the hull.

6. The hydrofoil device (3) according to any one of claims 1 to 5, **characterized in that** the front end of the signal cable duct (20) comprises a retainer (26) which is designed to be secured to the upper side (12) of the hull (10).

7. The hydrofoil device (3) according to any one of claims 1 to 6, **characterized in that** the signal cable duct (20) encloses an emergency stop cable (28) in addition to the at least one signal cable (24), wherein the emergency stop cable (28) is designed, in particular, to transmit an emergency stop signal from a reed switch (42) to the electric drive (8), wherein the hydrofoil device (3) further comprises, in particular, a magnet (43) which is coupled to a tether (47) and which can be releasably secured to the reed switch (42), wherein the reed switch (42) is in particular designed to be secured to the piece of water sports equipment (2) and to generate the emergency stop signal if the magnet (43) is removed from the reed switch (42).

8. The hydrofoil device (3) according to any one of claims 1 to 7, **characterized in that** the head end (5) of the support column (4) comprises an adapter (30) by means of which the hydrofoil device (3) can be secured to the underside (14) of the piece of water sports equipment (2), wherein the adapter (30) in particular comprises four bores (31).

9. The hydrofoil device (3) according to any one of claims 1 to 8, **characterized in that** the electric drive (8) is an impeller or a jet drive.

10. The hydrofoil device (3) according to any one of the claims 1 to 9, **characterized in that** the at least one battery (9) comprises an integrated battery (9) which is arranged in the support column (4).

11. The hydrofoil device (3) according to claim 10, **characterized in that** the support column (4) comprises a cavity for accommodating a coolant, wherein the integrated battery (4) is arranged in the support column (4) such that it is at least partially surrounded by the coolant.

12. The hydrofoil device (3) according to any one of the claims 1 to 11, **characterized in that** the at least one battery (9) comprises an integrated battery (9) which is arranged in the at least one foil (6, 7).

13. The hydrofoil device (3) according to claim 12, **characterized in that** the at least one foil (6, 7) comprises a front foil (6), wherein the integrated battery (9) is arranged in the front foil (6), wherein the electric drive (8) is secured to the front foil (6) such that the front foil (6) forms a structural unit together with the integrated battery (9) and the electric drive (8).

14. The hydrofoil device (3) according to any one of claims 1 to 13, **characterized in that** the at least one foil (6, 7) comprises at least one foldable foil (6, 7), wherein the at least one foldable foil can be pivoted from a position lying against the support column (4) into a position oriented orthogonally to the support column (4).

15. A piece of water sports equipment (2), comprising a hull (10) and a hydrofoil device (3) according to any one of claims 1 to 14, wherein the head end (5) of the support column (4) of the hydrofoil device (3) is secured to an underside (14) of the hull (10), wherein the front end (22) of the signal cable duct (20) grips around the front edge (16) of the hull, wherein in particular the signal cable duct (20) is guided proceeding from the support column (4) along the underside (14) of the hull (10) to the front edge (16) of the hull.

## Revendications

1. Dispositif hydrofoil (3) comprenant au moins une surface de sustentation (6, 7), un support de sustentation (4), un moteur électrique (8) et au moins un accumulateur (9), une extrémité supérieure (5) du support de sustentation (4) étant conçue pour être fixée sur la face inférieure (14) de la coque (10) d'un engin de sport nautique (2), ladite au moins une surface de sustentation (6, 7) étant fixée au support de sustentation (4), le moteur électrique (8) étant fixé au support de sustentation (4) et/ou à la surface de sustentation (6, 7), ledit au moins un accumulateur (9) étant relié électriquement au moteur électrique (8) et alimentant le moteur électrique (8) en énergie électrique, **caractérisé en ce que** le dispositif hydrofoil (3) comprend en outre un guide-câble de signaux (20) allongé, l'extrémité arrière (21) du guide-câble de signaux (20) étant agencée sur le support de sustentation (4) et une extrémité avant (22) du guide-câble de signaux (20) comprenant un dispositif de réception (23), le dispositif de réception (23) étant conçu pour recevoir des signaux de commande, le guide-câble de signaux (20) renfermant ledit câble de signaux (24), le câble de signaux (24) étant conçu pour transmettre les signaux de commande du dispositif de réception (23) au moteur électrique (8), le guide-câble de signaux (20) étant conçu pour entourer un bord avant de coque (16) de l'engin de sport nautique (2).

2. Dispositif hydrofoil (3) selon la revendication 1, **caractérisé en ce que** le guide-câble de signaux (20) est conçu de telle sorte que le dispositif de réception (23) soit agencé sur une face supérieure (12) de la coque (10) au niveau de la proue (17) de l'engin de sport nautique (2), de manière que l'extrémité avant (22) du guide-câble de signaux (22) entoure le bord avant (16) de la coque.

3. Dispositif hydrofoil (3) selon la revendication 1 ou la revendication 2, **caractérisé en ce que** le guide-câble de signaux (20) est conçu de manière élastique dans le sens longitudinal, le guide-câble de signaux (20) étant notamment constitué de caoutchouc ou comprenant du caoutchouc.

4. Dispositif hydrofoil (3) selon l'une des revendications 1 à 3, **caractérisé en ce que** le guide-câble de signaux (20) est conçu sous la forme d'une bande plate.

5. Dispositif hydrofoil (3) selon l'une des revendications 1 à 4, **caractérisé en ce que** l'extrémité avant (22) du guide-câble de signaux (20) comprend un bord plié (25) s'étendant transversalement à la direction longitudinale, formant une pince (27) destinée à enserrer le bord avant (16) de la coque.

6. Dispositif hydrofoil (3) selon l'une des revendications 1 à 5, **caractérisé en ce que** l'extrémité avant du guide-câble de signaux (20) comprend un support (26) conçu pour être fixé sur la face supérieure (12) de la coque (10).

7. Dispositif hydrofoil (3) selon l'une des revendications 1 à 6, **caractérisé en ce que** le guide-câble de signaux (20) renferme, en plus d'un câble de signaux (24), un câble d'arrêt d'urgence (28), le câble d'arrêt d'urgence (28) étant notamment conçu pour transmettre un signal d'arrêt d'urgence depuis un interrupteur à lames (42) vers le moteur électrique (8), le dispositif hydrofoil (3) comprenant en outre en particulier un aimant (43) relié à une corde de retenue (47), qui est apte à être fixé de manière amovible à l'interrupteur à lames (42), l'interrupteur à lames (42) étant en particulier conçu pour être fixé à l'engin de sport nautique (2) et de générer le signal d'arrêt d'urgence lorsque l'aimant (43) est retiré de l'interrupteur à lames (42).

8. Dispositif hydrofoil (3) selon l'une des revendications 1 à 7, **caractérisé en ce que** l'extrémité supérieure (5) du support de sustentation (4) comprend un adaptateur (30) au moyen duquel le dispositif hydrofoil (3) est apte à être fixé à la face inférieure (14) de l'engin de sport nautique (2), l'adaptateur (30) comprenant en particulier quatre alésages (31).

9. Dispositif hydrofoil (3) selon l'une des revendications 1 à 8, **caractérisé en ce que** le moteur électrique (8) est une turbine ou un propulseur à jet.

10. Dispositif hydrofoil (3) selon l'une des revendications 1 à 9, **caractérisé en ce que** ledit au moins un accumulateur (9) comprend un accumulateur intégré (9) qui est agencé dans le support de sustentation (4).

11. Dispositif hydrofoil (3) selon la revendication 10, **caractérisé en ce que** le support de sustentation (4) comprend une cavité destinée à recevoir un liquide de refroidissement, l'accumulateur intégré (4) étant agencé dans le support de sustentation (4) de manière à être au moins partiellement entouré par le liquide de refroidissement.

12. Dispositif hydrofoil (3) selon l'une des revendications 1 à 11, **caractérisé en ce que** ledit au moins un accumulateur (9) comprend un accumulateur intégré (9) qui est agencé dans ladite au moins une surface de sustentation (6, 7).

13. Dispositif hydrofoil (3) selon la revendication 12, **caractérisé en ce que** ladite au moins une surface de sustentation (6, 7) comprend une surface de sustentation avant (6), l'accumulateur intégré (9) étant agencé dans la surface de sustentation avant (6), le moteur électrique (8) étant fixé à la surface de sustentation avant (6) de telle sorte que la surface de sustentation avant (6) forme une unité structurelle comprenant l'accumulateur intégré (9) et le moteur électrique (8).

14. Dispositif hydrofoil (3) selon l'une des revendications 1 à 13, **caractérisé en ce que** ladite au moins une surface de sustentation (6, 7) comprend une surface de sustentation (6, 7) pliable, ladite au moins une surface de sustentation pliable étant apte à pivoter depuis une position adjacente au support de sustentation (4) jusqu'à une position orthogonale au support de sustentation (4).

15. Engin de sport nautique (2) comprenant une coque (10) et un dispositif hydrofoil (3) selon l'une des revendications 1 à 14, l'extrémité supérieure (5) du support de sustentation (4) du dispositif hydrofoil (3) étant fixée à la face inférieure (14) de la coque (10), l'extrémité avant (22) du guide-câble de signaux (20) s'engageant autour du bord avant (16) de la coque, le guide-câble de signaux (20) partant en particulier du support de sustentation (4) et s'étendant le long de la face inférieure (14) de la coque (10) jusqu'au bord avant (16) de la coque.
